# EUROPEAN PATENT APPLICATION

(11) **EP 4 557 069 A1**
(43) Date of publication of application: **21.05.2025**
(21) Application number: 23893600.9
(22) Date of filing: 01.11.2023
(51) Int. Cl.: G06F 3/04842

(54) **CONTENT ACQUISITION METHOD, READABLE STORAGE MEDIUM, PROGRAM PRODUCT AND ELECTRONIC DEVICE**

(30) Priority: 25.11.2022 CN 202211493945
(71) Applicant: Huawei Technologies Co., Ltd., Shenzhen, Guangdong 518129 (CN)
(72) Inventor: REN, Guofeng, Shenzhen, Guangdong 518129 (CN)
(74) Representative: Epping - Hermann - Fischer
(86) International application number: PCT/CN2023/128962
(87) International publication number: WO 2024/109509

(57) **Abstract**

This application relates to the field of terminal technologies, and discloses a content obtaining method, a readable storage medium, a program product, and an electronic device. When the electronic device detects that there is a security control on a current display interface, an area in which the security control is located is redrawn in a redrawing manner corresponding to each security control, to modify, clear, or replace user sensitive data, and retain display content corresponding to another control, so that a screenshot image or a video that does not include the user sensitive data is obtained. In this way, even if there is a security control on the current display interface of the electronic device, the screenshot image or the video that does not include the user sensitive data may be obtained after the area in which the security control is located is redrawn. This helps improve screenshot taking experience and data security of a user.

## Description

This application claims priority to Chinese Patent Application No. 202211493945.2, filed with the China National Intellectual Property Administration on November 25, 2022 and entitled "CONTENT OBTAINING METHOD, READABLE STORAGE MEDIUM, PROGRAM PRODUCT, AND ELECTRONIC DEVICE", which is incorporated herein by reference in its entirety.

### TECHNICAL FIELD

This application relates to the field of terminal technologies, and in particular, to a content obtaining method, a readable storage medium, a program product, and an electronic device.

### BACKGROUND

To help a user save, as an image (through screenshot taking) or a video (through screen recording), an interface displayed by an electronic device, the electronic device may obtain, by using an application installed in the electronic device or an application or a service provided by an operating system of the electronic device, the interface displayed by the electronic device, and generate the corresponding image or the corresponding video. However, some display interfaces of the electronic device include data related to user privacy and security, for example, bank account information, a payment code, and identity information. If a screenshot is directly taken on the display interface, user data is easily leaked, and security of the user data is affected.

### SUMMARY

In view of this, this application provides a content obtaining method, a readable storage medium, a program product, and an electronic device. According to the method, a security control on a display interface of an electronic device is redrawn to obtain a screenshot image or a video. This not only meets a content obtaining requirement (for example, screenshot taking or screen recording) of a user, but also protects user sensitive data on the display interface, thereby helping improve user experience.

According to a first aspect, an embodiment of this application provides a content obtaining method, applied to an electronic device. The method includes:
detecting a content obtaining instruction of a user for a display interface on a screen of the electronic device; and
in response to the content obtaining instruction, generating display content data corresponding to the display interface, where when the display interface includes a first security control, the display content data includes first redrawn data obtained by redrawing the first security control in a first redrawing manner.

In other words, when the electronic device detects that the display interface to be obtained by the content obtaining instruction includes a security control, the security control may be redrawn in a redrawing manner corresponding to the security control, to obtain the display content data corresponding to the content obtaining instruction. In this way, even if there is a security control on a current display interface of the electronic device, a screenshot image or a video that does not include user sensitive data may be obtained after an area in which the security control is located is redrawn. This not only meets a content obtaining requirement (for example, screenshot taking or screen recording) of the user, but also protects the user sensitive data on the display interface, thereby helping improve user experience.

In a possible implementation of the first aspect, when a security control identifier corresponding to the first security control is valid, the electronic device determines that the display interface includes the first security control.

In some implementations, the security control identifier may be set in a layout file of an application corresponding to the first security control.

In a possible implementation of the first aspect, the security control identifier of the first security control is set to be valid when the layout file of the application corresponding to the first security control is loaded.

In other words, when the electronic device loads the application layout, the security control identifier on the display interface of the electronic device may be set to be valid, so that the electronic device may determine, based on the security control identifier, whether there is a security control on the display interface of the electronic device when performing screenshot taking or screen recording on the display interface of the electronic device.

In a possible implementation of the first aspect, the first redrawing manner is obtained from a layout file of a first application corresponding to the first security control.

Developers of the application may add a same screenshot redrawing strategy identifier or different screenshot redrawing strategy identifiers to the layout file for security controls, to control a manner of redrawing a security control by the electronic device when the display interface includes the security control, so that screenshot content obtained after the electronic device redraws the security control is similar to that on the display interface. This improves user experience.

In a possible implementation of the first aspect, the first redrawing manner includes at least one of the following: content clearing, filling, content replacing, hiding, and re-layout.

In a possible implementation of the first aspect, when the first redrawing manner is the content replacing, the redrawing the first security control in a first redrawing manner includes:
obtaining a data type of user sensitive data in the first security control; and
replacing the user sensitive data with preset data whose data type is the same as that of the user sensitive data.

The first security control is redrawn in a content replacing manner, so that a content attribute of the display interface can be retained as much as possible (improving a similarity between a screenshot image and the display interface), and the user sensitive data is not leaked. This helps further improve screenshot taking experience of the user.

In a possible implementation of the first aspect, when the first redrawing manner is the re-layout, the redrawing the first security control in a first redrawing manner includes:
deleting a placeholder of the first security control in a current layout of an application corresponding to the first security control; and
re-laying out another control in the current layout.

In other words, the first security control is redrawn in a re-layout manner, so that inharmonious layouts of controls in a screenshot image due to the placeholder of the security control can be avoided. This helps improve user experience.

In a possible implementation of the first aspect, when the first redrawing manner is the content clearing, the redrawing the first security control in a first redrawing manner includes:
clearing user sensitive data in the first security control, and retaining a placeholder of the first security control in a current layout of an application corresponding to the first security control.

In a possible implementation of the first aspect, when the first redrawing manner is the filling, the redrawing the first security control in a first redrawing manner includes:
filling an area in which user sensitive data in the first security control is located with any one or more of a preset color, a pattern, or a mosaic.

In a possible implementation of the first aspect, when the first redrawing manner is the hiding, the redrawing the first security control in a first redrawing manner includes:
hiding the first security control, and retaining a placeholder of the first security control in a current layout of an application corresponding to the first security control.

In a possible implementation of the first aspect, the display interface further includes a second security control, and the display content data includes second redrawn data obtained by redrawing the second security control in a second redrawing manner.

In other words, when there are a plurality of security controls on the display interface, the electronic device may redraw security controls in different redrawing manners for different security controls. This helps improve screenshot taking experience of the user.

In a possible implementation of the first aspect, the content obtaining instruction includes a screenshot taking instruction or a screen recording instruction, and the display content data includes a screenshot image or a video.

In a possible implementation of the first aspect, an operating system of the electronic device is an Android system, and the Android system includes a graphics drawing module; and when it is determined that the display interface includes the first security control, the graphics drawing module generates the display content data corresponding to the content obtaining instruction.

According to a second aspect, an embodiment of this application provides a computer-readable storage medium. The readable storage medium includes instructions. When the instructions are executed by an electronic device, the electronic device is enabled to implement the content obtaining method provided in any one of the first aspect and the possible implementations of the first aspect.

According to a third aspect, an embodiment of this application provides an electronic device. The electronic device includes: a memory, where the memory stores instructions; and at least one processor, configured to execute the instructions, so that the electronic device implements the content obtaining method provided in any one of the first aspect and the possible implementations of the first aspect.

According to a fourth aspect, an embodiment of this application provides a computer program product. When the computer program product runs on an electronic device, the electronic device is enabled to implement the content obtaining method provided in any one of the first aspect and the possible implementations of the first aspect.

### BRIEF DESCRIPTION OF DRAWINGS

FIG. 1A is a diagram of a screenshot taking scenario according to some embodiments of this application;
FIG. 1B is a diagram of another screenshot taking scenario according to some embodiments of this application;
FIG. 2 is a diagram of still another screenshot taking scenario according to some embodiments of this application;
FIG. 3A is a diagram of a screenshot image obtained in a manner of filling an area of a security control with a grid pattern according to some embodiments of this application;
FIG. 3B is a diagram of a screenshot image obtained in a manner of filling an area of a security control with a color according to some embodiments of this application;
FIG. 3C is a diagram of a screenshot image obtained in a manner of filling an area of a security control with a mosaic according to some embodiments of this application;
FIG. 3D is a diagram of a screenshot image obtained in a manner of replacing user sensitive data with data of a same type according to some embodiments of this application;
FIG. 3E is a diagram of a screenshot image obtained in a manner of hiding a security control but retaining a placeholder according to some embodiments of this application;
FIG. 3F is a diagram of a screenshot image obtained in a re-layout manner according to some embodiments of this application;
FIG. 3G is a diagram of a screenshot image obtained by using different screenshot redrawing strategies for different security controls according to some embodiments of this application;
FIG. 4A is a schematic flowchart of a content obtaining method according to some embodiments of this application;
FIG. 4B is a diagram of an interface displayed by a mobile phone 10 after a screenshot of the interface including a security control is successfully taken according to some embodiments of this application;
FIG. 5 is a diagram of a software architecture of a mobile phone 10 according to some embodiments of this application;
FIG. 6 is a schematic flowchart of a content obtaining method according to some embodiments of this application;
FIG. 7 is a schematic interaction flowchart of a layout loading method according to some embodiments of this application;
FIG. 8A and FIG. 8B are a schematic interaction flowchart of a content obtaining method according to some embodiments of this application;
FIG. 9A and FIG. 9B are a schematic interaction flowchart of another content obtaining method according to some embodiments of this application; and
FIG. 10 is a diagram of a structure of a mobile phone 10 according to some embodiments of this application.

### DESCRIPTION OF EMBODIMENTS

The illustrative embodiments of this application include but are not limited to a content obtaining method, a readable storage medium, a program product, and an electronic device.

It may be understood that technical solutions provided in embodiments of this application are applicable to any terminal device that can take a screenshot of a display interface of the terminal device, including but not limited to a mobile phone, a tablet computer, a wearable device (for example, a smartwatch or a smart band), an in-vehicle device (for example, an in-vehicle infotainment system), an internet of things device, a smart home device (for example, a smart television), and the like. For ease of description, the following describes the technical solutions of this application by using an example in which the terminal device is a mobile phone.

As described above, some display interfaces of the electronic device include data related to user privacy and security (referred to as user sensitive data below), for example, bank account information, a payment code, and user identity information. If a screenshot is directly taken on the display interface, user data is easily leaked, and security of the user data is affected.

Based on this, in some embodiments, a security window identifier (FLAG_SECURE) may be set for a window (referred to as a security window below) that is in an application in the electronic device and that includes the user sensitive data. In this way, when detecting a screenshot taking operation performed by a user, the electronic device may detect whether there is a window with a security window identifier on a current display interface of the electronic device, to determine whether the current display interface includes the user sensitive data. If the window includes a security window identifier, it indicates that the current display interface may include the user sensitive data, and screenshot taking or screen recording is not performed on the current display interface.

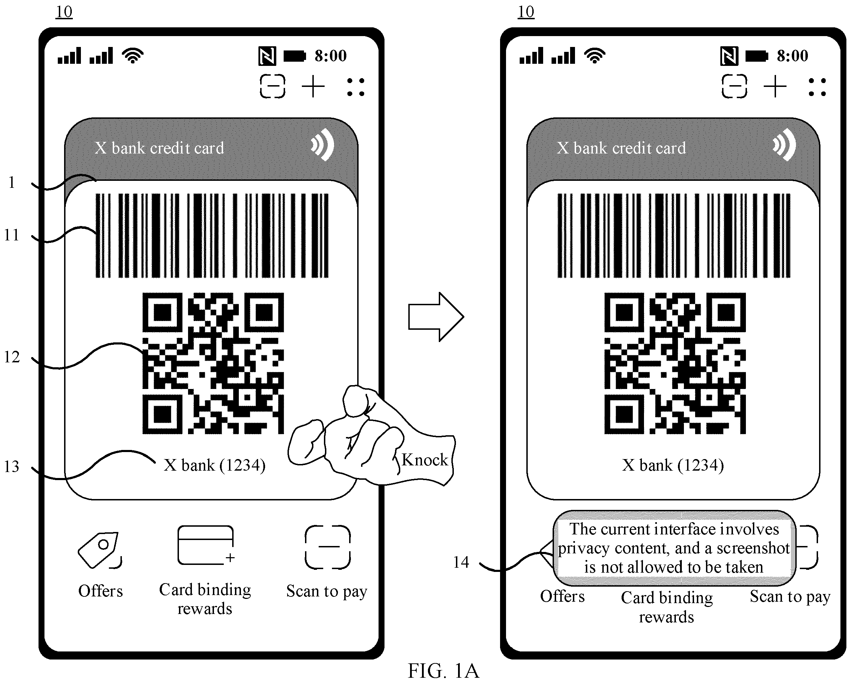

For example, FIG. 1A is a diagram of a screenshot taking scenario according to some embodiments of this application. As shown in FIG. 1A, a payment window 1 of a Wallet application displayed by a mobile phone 10 includes a barcode control 11, a two-dimensional code control 12, and a payment account control 13. The barcode control 11, the two-dimensional code control 12, and the payment account control 13 record a barcode and a two-dimensional code that can be used to directly perform a transaction by using a bank card of the user, and bank card information of the user, and the Wallet application may add a security window identifier for the payment window 1. Therefore, when detecting a screenshot taking operation performed by the user, for example, when detecting an operation that the user knocks a screen of the mobile phone 10 with a knuckle, the mobile phone 10 detects that there is a security window on a current display interface of the mobile phone 10, namely, the payment window 1 of the Wallet application, and further displays prompt information 14, to prompt the user that "The current interface involves privacy content, and a screenshot is not allowed to be taken", and not to take a screenshot of the current display interface of the mobile phone 10. This avoids leakage of a payment code and bank card information of the user.

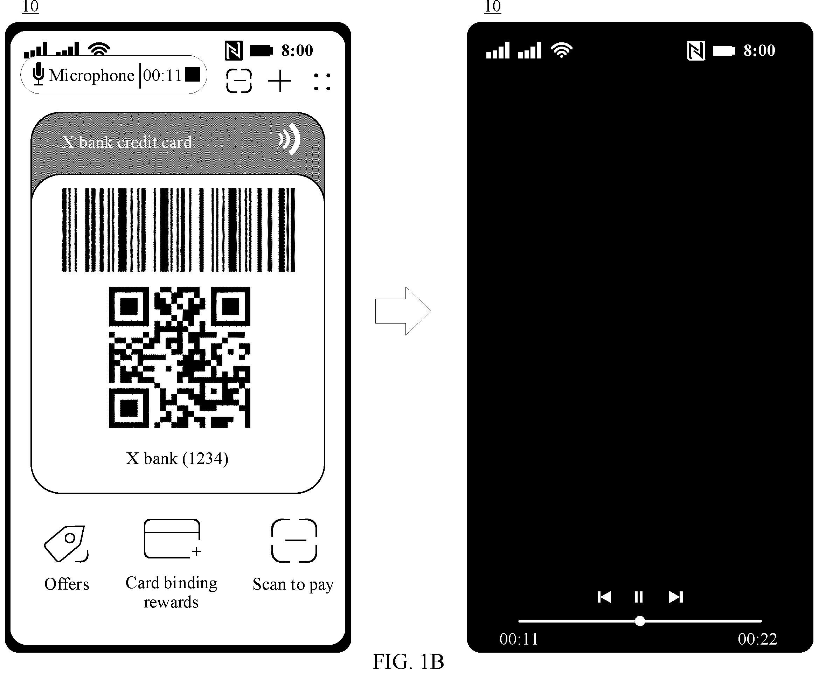

For another example, FIG. 1B is a diagram of another screenshot taking scenario according to some embodiments of this application. As shown in FIG. 1B, a mobile phone 10 performs screen recording on an interface displayed by the mobile phone 10. At an 11^{th} second during screen recording, the mobile phone 10 displays a payment window 1 of a Wallet application. The payment window 1 of the Wallet application is a security window. Therefore, the mobile phone 10 does not perform screen recording on a current display interface of the mobile phone 10, but sets a video frame (a video frame corresponding to a video at the 11^{th} second) corresponding to a screen recording result to all black. This avoids leakage of a payment code and bank card information of a user.

According to the foregoing method, leakage of user sensitive data can be effectively avoided. However, in some scenarios, on an interface displayed by the user, only some controls in some windows are related to user sensitive data, and a purpose of taking a screenshot by the user is to store content other than the user sensitive data on the display interface of the electronic device. According to the foregoing method, once there is a security window on the current display interface of the electronic device, the electronic device does not take a screenshot of the current display interface, and therefore cannot obtain a screenshot image or a video required by the user, affecting user experience.

In view of this, an embodiment of this application provides a content obtaining method. An application or an operating system in an electronic device may set different screenshot redrawing strategies for a security control. In this way, when the electronic device detects that there is a security control on a current display interface, an area in which the security control is located is redrawn based on a screenshot redrawing strategy corresponding to each security control, and display content corresponding to another control is retained, so that a screenshot image or a video that does not include user sensitive data is obtained. In this way, even if there is a security control on the current display interface of the electronic device, the screenshot image or the video that does not include the user sensitive data may be obtained after the area in which the security control is located is redrawn. This helps improve user experience.

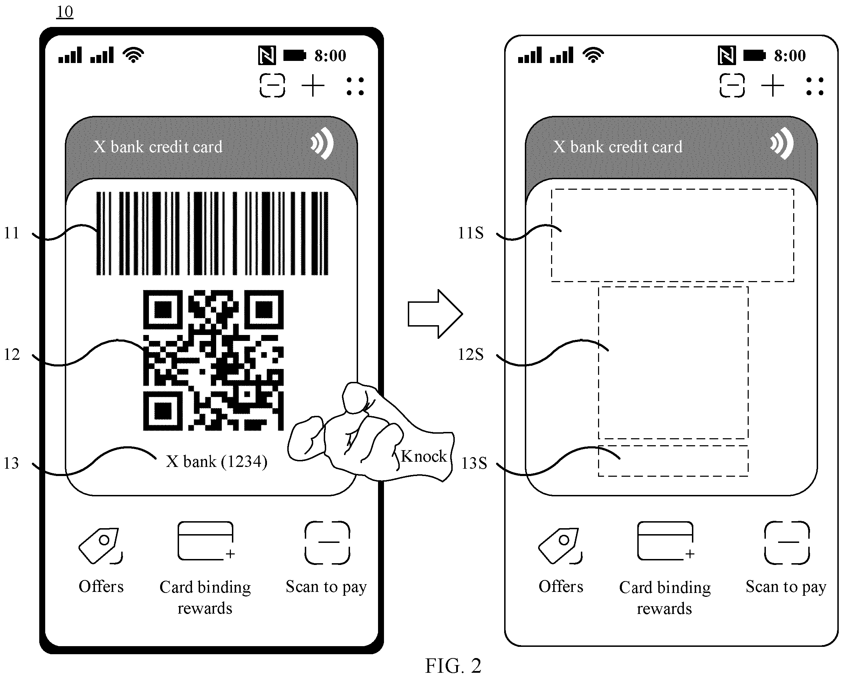

For example, with reference to FIG. 2, an interface of a Wallet application displayed by a mobile phone 10 includes three security controls: a barcode control 11, a two-dimensional code control 12, and a payment account control 13. When detecting a screenshot taking operation performed by a user, for example, when detecting an operation that the user knocks a screen of the mobile phone 10 with a knuckle, the mobile phone 10 detects that there is a security control on a current display interface of the mobile phone 10. Then, the mobile phone 10 clears, based on the screenshot redrawing strategy corresponding to each security control, an area 11S in which a payment barcode in the barcode control 11 is located, an area 12S corresponding to a payment two-dimensional code in the two-dimensional code control 12, and an area 13S corresponding to a payment account in the payment account control 13, to obtain a screenshot image. The screenshot image does not include the payment barcode, the payment two-dimensional code, or the payment account. This not only protects privacy data of the user, but also takes a screenshot of an area that is not related to the user sensitive data and that is on the interface of the Wallet application, thereby improving user experience.

It may be understood that, in some embodiments, the screenshot redrawing strategy may include at least one of the following processing strategies:
Content clearing: is to retain a placeholder of a security control on a display interface, and clear content that is filled by an application and that is in the security control. For example, with reference to FIG. 2, the mobile phone 10 may clear the payment barcode, the payment two-dimensional code, and the payment account that are filled by the application and that are respectively in the barcode control 11, the two-dimensional code control 12, and the payment account control 13.

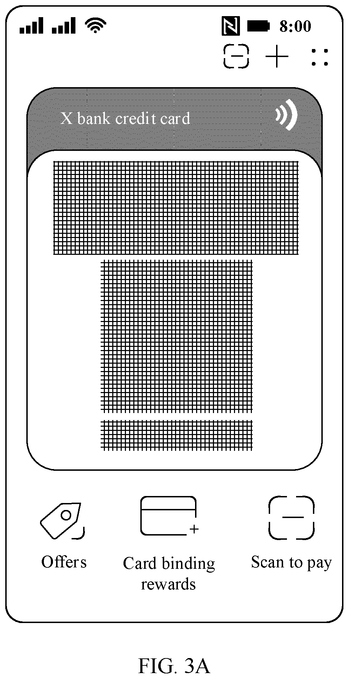

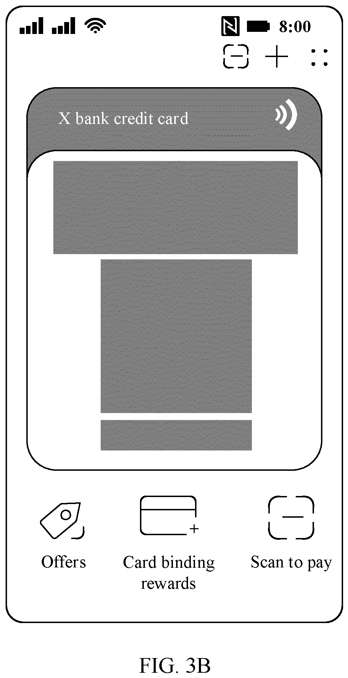

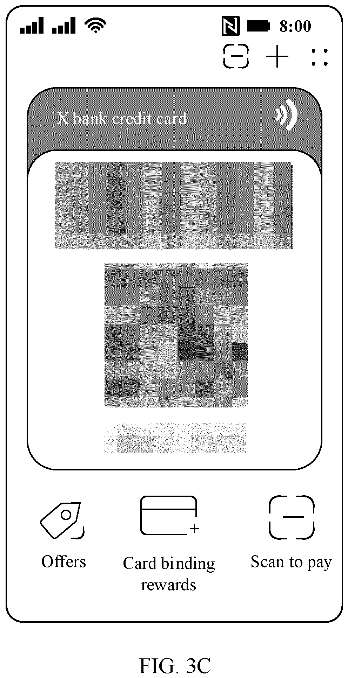

Filling: is to retain a placeholder of a security control on a display interface, and fill an area of the placeholder of the security control, for example, fill the area with any one or more of a pattern, a color, or a mosaic. For example, with reference to a screenshot image shown in FIG. 3A, the mobile phone 10 may fill areas in which the original barcode control 11, the original two-dimensional code control 12, and the original payment account control 13 are located with a grid pattern; with reference to a screenshot image shown in FIG. 3B, the mobile phone 10 may fill areas in which the original barcode control 11, the original two-dimensional code control 12, and the original payment account control 13 are located with a solid color; and with reference to a screenshot image shown in FIG. 3C, the mobile phone 10 may fill areas in which the original barcode control 11, the original two-dimensional code control 12, and the original payment account control 13 are located with a mosaic.

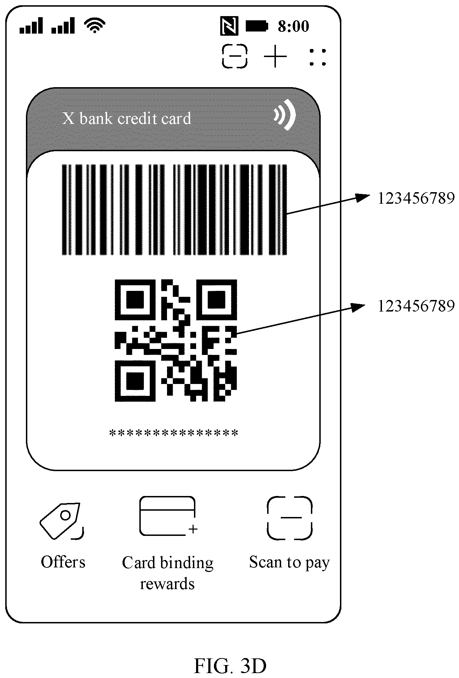

Content replacing: is to retain a placeholder of a security control on a display interface, and replace user sensitive data with another data (for example, another data whose data type is the same as or different from that in the security control) in the security control. For example, with reference to a screenshot image shown in FIG. 3D, the mobile phone 10 may replace the payment barcode in the barcode control 11 with a barcode whose indication content is "123456789", replace the payment two-dimensional code in the two-dimensional code control 12 with a two-dimensional code whose indication content is "123456789", and replace the payment account information in the payment account control 13 with "******". Based on the screenshot redrawing strategy, a content attribute of the current display interface of the mobile phone 10 can be retained as much as possible (improving a similarity between a screenshot image and the display interface), and the user sensitive data is not leaked. This helps further improve screenshot taking experience of the user. It may be understood that, in some embodiments, after the user sensitive data is replaced with another data whose data type is the same as that in the security control, an identifier indicating that content in an area of the security control has been replaced may be further added to remind the user.

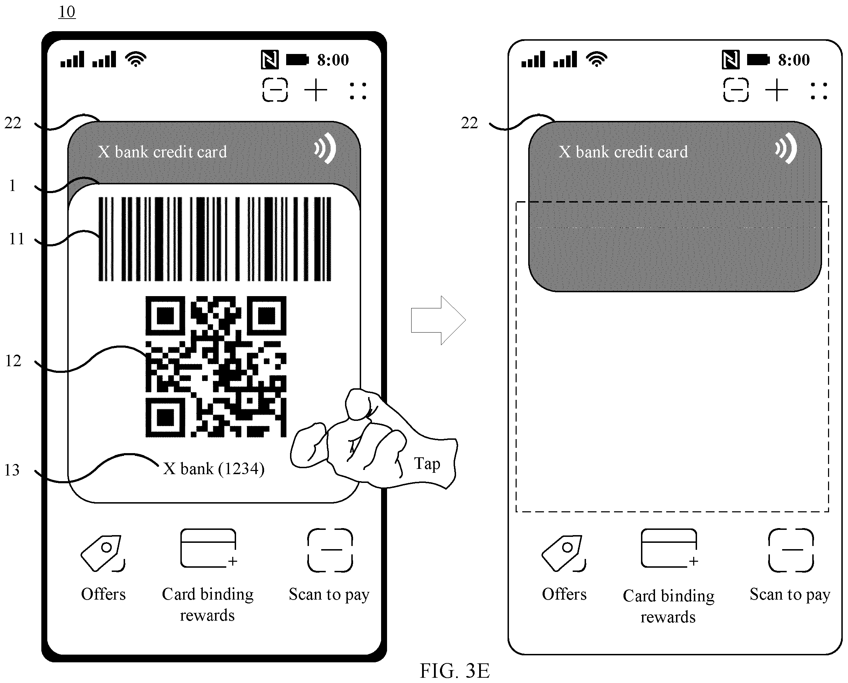

Hiding: is to retain a placeholder of a security control on a display interface, but hide the interface of the security control. For example, with reference to FIG. 3E, the barcode control 11, the two-dimensional code control 12, and the payment account control 13 are all displayed in the payment window 1, and a card swiping control 22 is displayed at a lower layer of the payment window 1. The mobile phone 10 may hide the barcode control 11, the two-dimensional code control 12, and the payment account control 13, so that the payment window 1 no longer includes any control, the payment window 1 is hidden, all content of the card swiping control 22 is displayed in the screenshot image, and locations of other controls on the interface keep unchanged.

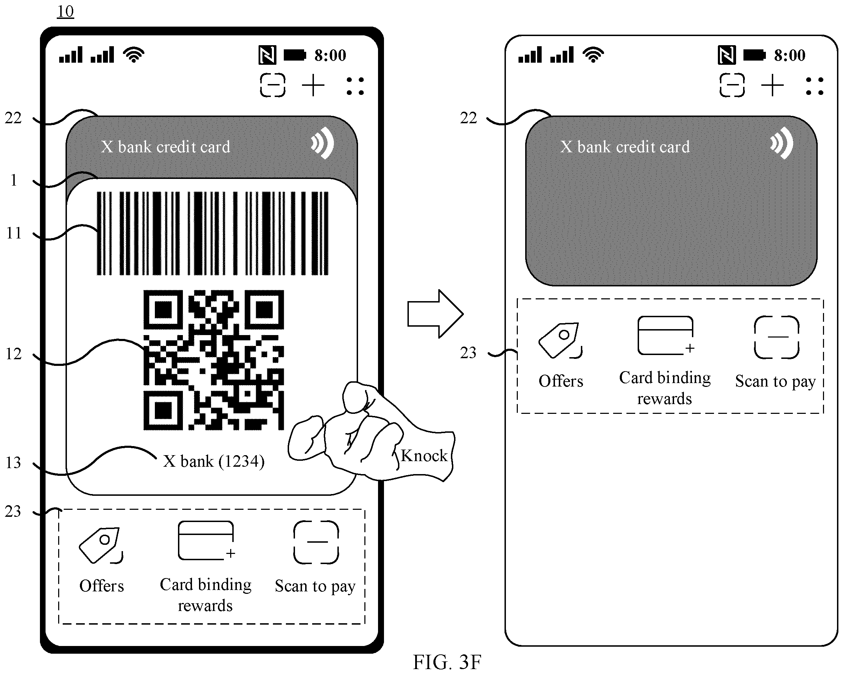

Re-layout: is to delete a placeholder of a security control on a display interface, and re-lay out an interface of an application corresponding to the security control. For example, with reference to a screenshot image shown in FIG. 3F, the barcode control 11, the two-dimensional code control 12, and the payment account control 13 are all displayed in the payment window 1, and a card swiping control 22 is displayed at a lower layer of the payment window 1. The mobile phone 10 may delete placeholders of the barcode control 11, the two-dimensional code control 12, and the payment account control 13, so that the payment window 1 no longer includes any control, a placeholder of the payment window 1 is deleted, all content of the card swiping control 22 is displayed in the screenshot image, and a location of a control 23 is moved upward. This avoids inharmonious layouts of controls in the screenshot image due to placeholders of each security control, and helps improve user experience.

It may be understood that, in some embodiments, for some controls having a high security requirement, or in a case in which a security control is displayed in a full-screen manner, the screenshot redrawing strategy may further include screenshot prohibiting, namely, not allowing the mobile phone 10 to take a screenshot of the current display interface.

It may be understood that, in some other embodiments, another screenshot redrawing strategy may be further included. This is not limited herein.

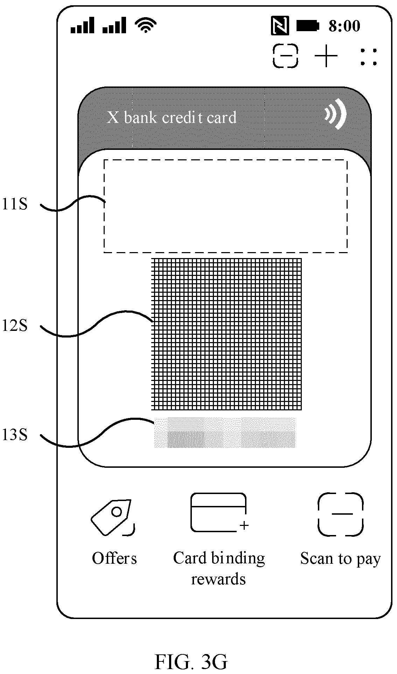

It may be understood that, in some embodiments, different security controls of a same application may have different screenshot redrawing strategies. For example, with reference to a screenshot image shown in FIG. 3G, the mobile phone 10 may clear a payment barcode in an area 11S in which the barcode control 11 is located, fill an area 12S in which the two-dimensional code control 12 is located with a grid pattern, and fill an area 13S in which the payment account control 13 is located with a mosaic.

It may be understood that, in some other embodiments, the screenshot redrawing strategy may further include any strategy that may be used to modify, delete, or replace the user sensitive data. This is not limited herein.

The following further describes the technical solutions of this application with reference to the cases shown in FIG. 2 to FIG. 3G.

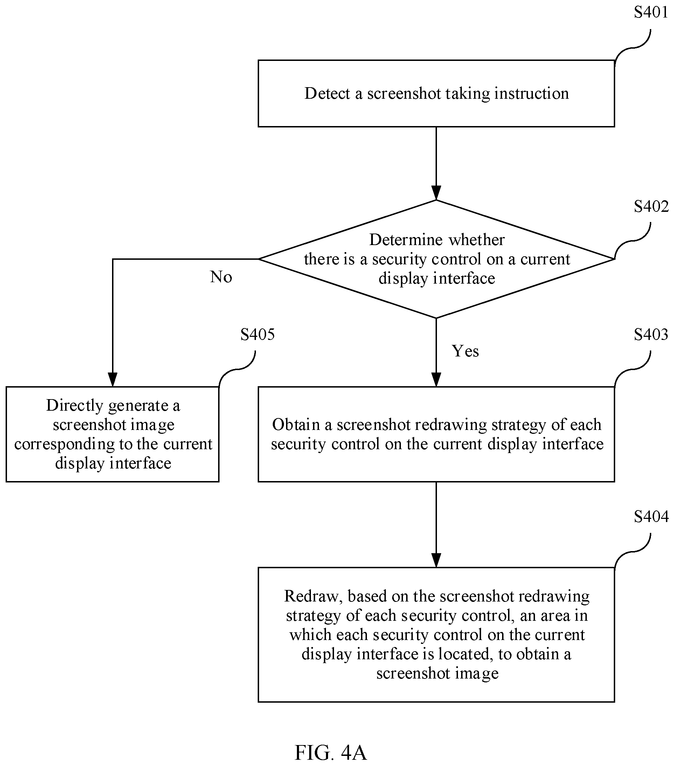

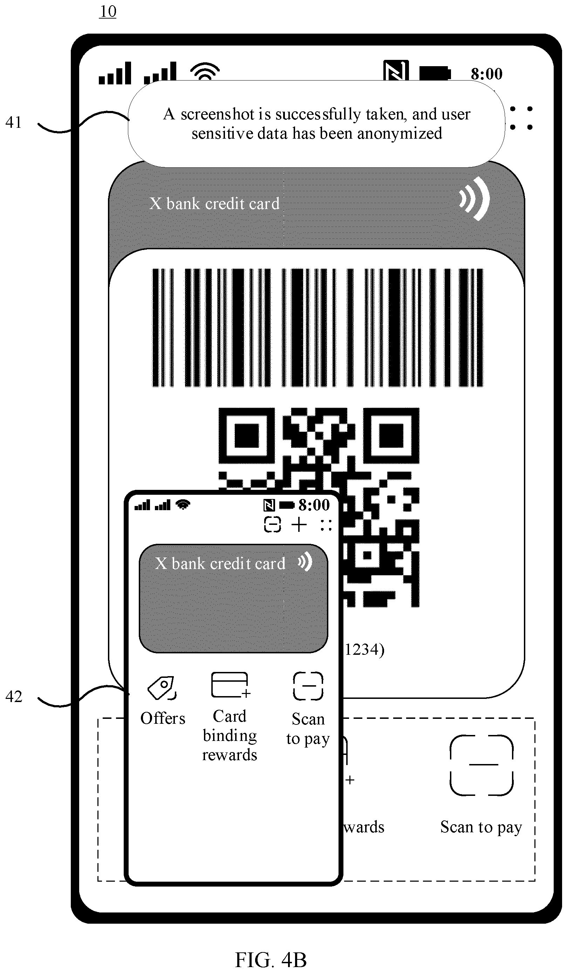

Specifically, FIG. 4A is a schematic flowchart of a content obtaining method according to some embodiments of this application. The method is performed by the mobile phone 10. As shown in FIG. 4, the procedure includes the following steps:
S401: Detect a screenshot taking instruction.

The mobile phone 10 detects the screenshot taking instruction, to trigger the content obtaining method provided in embodiments of this application.

For example, when the mobile phone 10 detects a screenshot taking gesture, a screenshot taking operation, or a screenshot taking voice defined by an operating system, a screenshot taking application or service, a screen recording application or service, or the like of the mobile phone 10, the screenshot taking instruction may be detected, to trigger the content obtaining method provided in embodiments of this application.

For example, the screenshot taking gesture may include but is not limited to an operation that the user knocks a display of the mobile phone 10 with a knuckle, a multi-finger swiping operation performed by the user on the display of the mobile phone 10, and the like.

For another example, the screenshot taking operation may include but is not limited to a triggering operation performed by the user on a screenshot taking control in a menu bar of the mobile phone 10 or an application of the mobile phone 10, a preset operation on a volume control or a power control of the mobile phone 10, and the like.

For another example, the screenshot taking voice may include a preset screenshot taking voice detected by the operating system or an installed application in the mobile phone 10. For example, when capturing a voice including "screenshot taking", "image capturing", or "screen recording", the mobile phone 10 may detect the screenshot taking instruction.

It may be understood that, in some other embodiments, the mobile phone 10 may also detect the screenshot taking instruction in another case. A source and a form of the screenshot taking instruction are not limited herein.

S402: Determine whether there is a security control on a current display interface.

After detecting the screenshot taking instruction, the mobile phone 10 determines whether there is a security control on the current display interface of the mobile phone 10. If there is a security control on the current display interface, it indicates that the current display interface may include user sensitive data, and step S403 is performed. Otherwise, it indicates that the current display interface does not include user sensitive data, and step S405 is performed.

For example, in some embodiments, an application or the operating system in the mobile phone 10 may attach a security control mark to a control. When a security control mark of a control is valid, it indicates that the control is a security control. Otherwise, it indicates that the control is not a security control. In this way, the mobile phone 10 may: obtain a security control mark of each control on the current display interface, and when a security control mark of a control is valid, determine that there is a security control on the current display interface; or when the security control mark of each control on the current display interface is invalid, determine that there is no security control on the current display interface. A specific manner of setting the security control mark is described below with reference to a software architecture of the mobile phone 10. Details are not described herein again.

It may be understood that, in some other embodiments, the mobile phone 10 may alternatively determine, in another manner, whether there is a security control on the current display interface. This is not limited herein. For example, in some embodiments, the mobile phone 10 may record an identifier of the security control.

S403: Obtain a screenshot redrawing strategy of each security control on the current display interface.

When determining that there is a security control on the current display interface, the mobile phone 10 obtains the screenshot redrawing strategy corresponding to each security control.

For example, in some embodiments, each application in the mobile phone 10 presets a corresponding screenshot redrawing strategy for a security control included in each application, and the mobile phone 10 may obtain, from an application corresponding to each security control, the screenshot redrawing strategy corresponding to each security control.

It may be understood that, in some embodiments, the mobile phone 10 may further set corresponding screenshot redrawing strategies for different types of security controls, and obtain, based on a type of each security control, a screenshot redrawing strategy corresponding to each security control, so that the mobile phone 10 may query, from the mobile phone 10 based on the type of each security control, the screenshot redrawing strategy corresponding to each security control.

It may be understood that, the screenshot redrawing strategy may include but is not limited to content clearing, filling, content replacing, hiding, re-layout, screenshot prohibiting, and the like that are described above.

S404: Redraw, based on the screenshot redrawing strategy of each security control, an area in which each security control on the current display interface is located, to obtain a screenshot image.

After obtaining the screenshot redrawing strategy of each security control, the mobile phone 10 redraws, based on the screenshot redrawing strategy corresponding to each security control, the area corresponding to each security control on the current display interface of the mobile phone 10, to obtain the screenshot image.

For example, in the case shown in FIG. 2, the mobile phone 10 may set the areas corresponding to the security controls to be transparent, to obtain the screenshot image. For another example, in the cases shown in FIG. 3A to FIG. 3C, the mobile phone 10 may fill the areas corresponding to the security controls with any one or more of the pattern, the color, or the mosaic, to obtain the screenshot image. For another example, in the case shown in FIG. 3D, the mobile phone 10 may replace the payment barcode in the barcode control 11 with the barcode whose indication content is "123456789", replace the payment two-dimensional code in the two-dimensional code control 12 with the two-dimensional code whose indication content is "123456789", and replace the payment account information in the payment account control 13 with "******", to obtain the screenshot image. For another example, in the case shown in FIG. 3E, the mobile phone 10 may retain the placeholder of the security control and hide the security control, to obtain the screenshot image. For another example, in the case shown in FIG. 3F, the mobile phone 10 may hide the security control and re-lay out the display interface of the application (the Wallet application) on the current display interface, to obtain the screenshot image. For another example, in the case shown in FIG. 3G, the mobile phone 10 may clear the barcode in the barcode control, fill the area 12S corresponding to the two-dimensional code control 12 with the grid pattern, and fill the area 13S corresponding to the payment account control 13 with the mosaic, to obtain the screenshot image.

It may be understood that, in some embodiments, when the generated screenshot image is an image obtained after the security control is redrawn, the mobile phone 10 may further prompt the user that the user sensitive data has been processed in the screenshot image. For example, with reference to FIG. 4B, in the case shown in FIG. F, after generating the screenshot image, the mobile phone 10 may further display a screenshot image 42 on the current display interface of the mobile phone 10 in an overlay manner, and display a prompt information box 41, to prompt the user that "A screenshot is successfully taken, and user sensitive data has been anonymized".

S405: Directly generate a screenshot image corresponding to the current display interface.

When there is no security control on the current display interface, the mobile phone 10 directly draws the current display interface as an image, to obtain the screenshot image corresponding to the current display interface.

According to the content obtaining method provided in embodiments of this application, the electronic device may take a screenshot of the display interface including the security control, so that a screenshot taking requirement of the user can be met. In addition, because an area that is in the screenshot image and that includes the user sensitive data is redrawn based on a corresponding screenshot redrawing strategy, leakage of the user sensitive data is avoided. In addition, the electronic device may further use different screenshot redrawing strategies for different security controls. This improves user experience.

The following further describes the technical solutions in embodiments of this application with reference to a software architecture of the mobile phone 10.

For ease of understanding, the software architecture of the mobile phone 10 is first described.

It may be understood that the software architecture of the mobile phone 10 may be any software architecture such as iOS^{™}, Android^{™}, or HarmonyOS^{™}. The following uses Android as an example to describe the software architecture of the mobile phone 10.

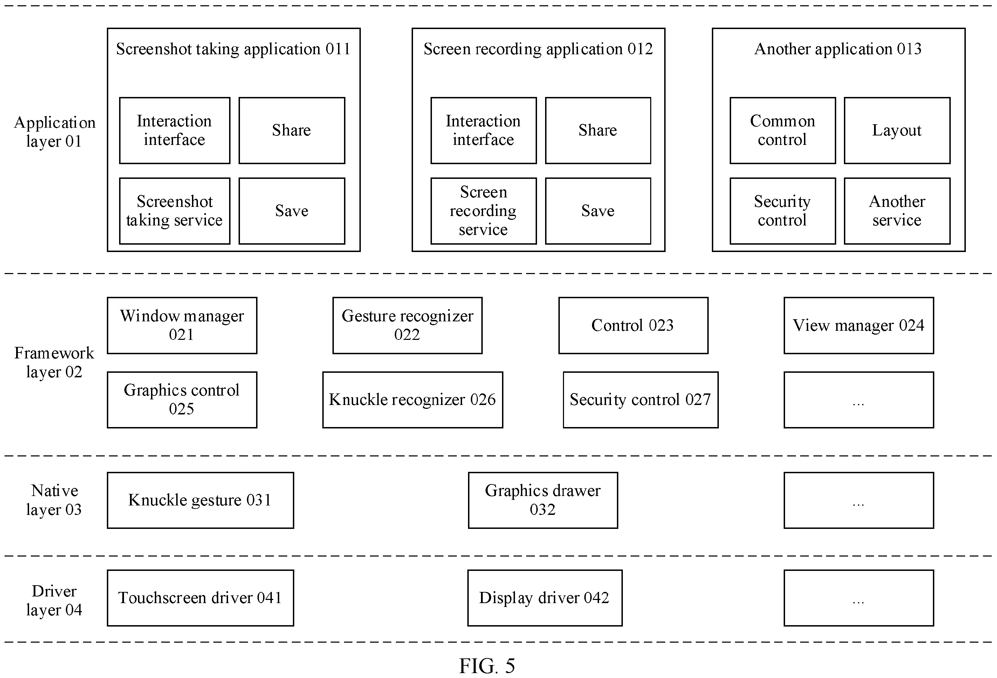

Specifically, FIG. 5 is a diagram of a structure of the software architecture according to some embodiments of this application.

As shown in FIG. 5, the software architecture of the mobile phone 10 is a multi-layer structure, including an application layer 01, an application framework layer 02 (referred to as a framework layer for short), a native layer (native) 03, and a driver layer 04.

The application layer includes applications in the mobile phone 10, for example, a desktop, a user interface, setting, a screenshot taking application 011, a screen recording application 012, and another application 013.

The screenshot taking application 011 may be configured to: in response to a screenshot taking operation performed by a user, take a screenshot of a current display interface of the mobile phone 10 by using interfaces and services of the framework layer 02, the native layer 03, and the driver layer 04, to obtain a screenshot image; and save the screenshot image or share the screenshot image to another electronic device by using another application. The screen recording application 012 may be configured to: in response to a screenshot taking operation performed by the user, take a screenshot of a current display interface of the mobile phone 10 by using interfaces and services of the framework layer 02, the native layer 03, and the driver layer 04, to obtain a screenshot video; and save the screenshot video or share the screenshot video to another electronic device by using another application.

It may be understood that, in some other embodiments, the application layer 01 may include more or fewer applications. This is not limited herein.

The application framework layer 02 is configured to provide an application programming interface (application programming interface, API) and a programming framework for an application at the application layer 01. For example, the application framework layer 02 may include a window manager (WindowManagerService, WMS) 021, a gesture recognizer (MotionRecognition) 022, a control 023 (UiKit), a view manager (View) 024, a graphics control (SurfaceControl) 025, a knuckle recognizer (HwGestureAction) 026, a security control (SecUikit) 027, and the like.

An application manager is a system service provided by an Android^{™} system, and is configured to manage startup and loading of an application and a service in the mobile phone 10.

The window manager 021 is configured to manage a window in the mobile phone 10, for example, monitor a life cycle of the window, an input and a focus event, a screen direction, conversion, animation, a location, and deformation. The window manager 021 is further configured to send all window metadata to a graphics drawer (SurfaceFlinger) 032, so that the graphics drawer 032 can synthesize the data on a screen into a user interface.

The gesture recognizer 022 is configured to recognize a gesture of the user acting on a touchscreen of the mobile phone 10, for example, sliding, tapping, and pinching.

The control 023 is a unit used for layout in an application, and a user interface displayed in the application is obtained by combining and overlaying a plurality of controls. In some embodiments, an attribute, a combination relationship, an overlay relationship, a location relationship, and the like of each control on each user interface of the application may be recorded in a layout file.

The view manager 024 is configured to obtain, based on the layout file of the application, the attribute, the combination relationship, the location relationship, the overlay relationship, and the like of each control on the user interface of the application. In some embodiments, the view manager 024 may be further configured to: record a screenshot redrawing strategy identifier and a screenshot redrawing strategy that correspond to a security control on the user interface of the application, and adjust each security attribute of the application based on the screenshot redrawing strategy, to redraw the security control.

The graphics control 025 is configured to control and manage a corresponding control in a window of each application in the mobile phone 10, for example, creation, destruction, transparency, display, or hiding of each control.

The knuckle recognizer 026 is configured to recognize whether the user acts on the touchscreen of the mobile phone 10 with a knuckle.

The security control 027 is a control whose security control mark is valid in an attribute of the control. An application may include a control and a security control. In some embodiments, attribute information of the security control may further include a screenshot redrawing strategy identifier corresponding to the security control, and the screenshot redrawing strategy identifier indicates a screenshot redrawing strategy for redrawing the security control when the electronic device takes a screenshot of the security control.

In some embodiments, the security control mark and the screenshot redrawing strategy identifier of the security control may be embedded in the layout file of the application, or may be set by setting a corresponding interface by using the security control. A setting form, a storage form, and the like of the security control mark and the screenshot redrawing strategy identifier are not limited herein.

It may be understood that, in some other embodiments, the application framework layer 02 may include more or fewer modules or services. This is not limited herein.

The native layer 03 includes some common native services, link libraries, and the like. The native layer may communicate with upper-layer Java code (referred to as a JNI mechanism) in C and C++ languages, and may further interact with a bottom-layer hardware driver. In some embodiments, the native layer may include a knuckle gesture (KnuckleGesture) 031, the graphics drawer (SurfaceFlinger) 032, and the like.

The knuckle gesture 031 is configured to recognize a gesture of the user acting on the touchscreen of the mobile phone 10 with a knuckle, for example, a single-knuckle knocking gesture or a dual-knuckle knocking gesture. In this way, the screenshot taking application 011 or the screen recording application 012 may detect a screenshot taking instruction when the knuckle gesture 031 recognizes the single-knuckle knocking gesture or the dual-knuckle knocking gesture.

The graphics drawer 032 is configured to draw application windows, controls, and the like in the mobile phone 10 as images for display on a display, or generate a screenshot image.

In particular, in some embodiments, the graphics drawer 032 is further configured to: when receiving a request for drawing the screenshot image, determine whether there is a security control on a current display interface of the mobile phone 10; and when determining that there is a security control, send a notification message indicating that there is a security control on the current display interface to the graphics control 025, to notify a control identifier and the like of the security control on the current display interface.

It may be understood that the control identifier is an identifier, for example, an identity (identity, ID) or a control name, that may uniquely indicate a control.

It may be understood that, in some embodiments, the graphics drawer 032 may alternatively be disposed at the application framework layer 02. This is not limited herein.

It may be understood that, in some other embodiments, the native layer 03 may include more or fewer modules or services. This is not limited herein.

The driver layer 04 may include drivers of hardware and modules of the mobile phone 10, for example, a touchscreen driver 041 and a display driver 042.

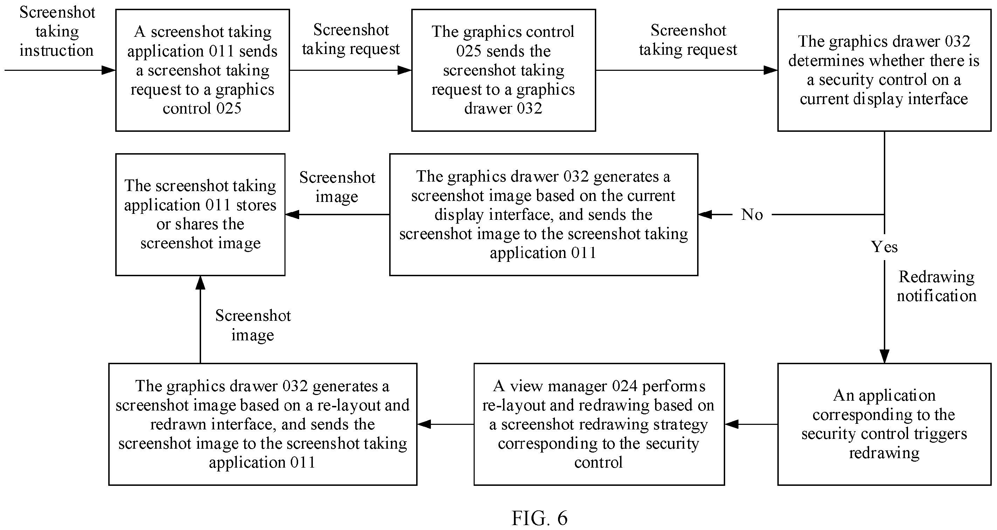

Based on the software architecture shown in FIG. 5, with reference to FIG. 6, after detecting a screenshot taking operation triggered by the user, the mobile phone 10 may send a screenshot taking instruction to the screenshot taking application 011 or the screen recording application 012 (the screenshot taking application 011 is used as an example below). The screenshot taking application 011 sends a screenshot taking request to the graphics control 025. After receiving the screenshot taking request, the graphics control 025 forwards the screenshot taking request to the graphics drawer 032. After receiving the screenshot taking request, the graphics drawer 032 determines whether there is a security control on the current display interface of the mobile phone 10.

If there is a security control on the current display interface of the mobile phone 10, the graphics drawer 032 notifies an application corresponding to the security control to perform redrawing (re-draw an attribute of a control in a window of a new application and set a layout). The application corresponding to the security control sends a redrawing request to the view manager 024, to trigger redrawing. In response to the redrawing request, the view manager 024 adjusts an attribute and a layout of a control on the current display interface based on a screenshot redrawing strategy corresponding to the security control, to delete, modify, or replace user sensitive data on the current display interface. Then, the graphics drawer 032 generates a screenshot image based on a re-layout and redrawn interface, and sends the screenshot image to the screenshot taking application 011. Finally, the screenshot taking application 11 stores or shares the screenshot image.

If there is no security control on the current display interface of the mobile phone 10, the graphics drawer 032 directly generates a screenshot image based on the current display interface of the mobile phone 10 and sends the screenshot image to the screenshot taking application 011, and then the screenshot taking application 011 stores or shares the screenshot image.

In this way, when there is a security control on the current display interface of the mobile phone 10, that is, when the current display interface includes the user sensitive data, a screenshot may be taken on the current display interface of the mobile phone 10. This helps improve user experience. In addition, the user sensitive data in the generated screenshot image is deleted, modified, or replaced based on the corresponding redrawing strategy, so that leakage of the user sensitive data can be avoided, and security of user data can be improved.

The following further describes the technical solutions of this application with reference to the software architecture shown in FIG. 5.

As described above, in the software architecture shown in FIG. 5, the graphics drawer 032 determines whether there is a security control on the current display interface of the mobile phone 10. Therefore, a security control mark of the security control needs to be set to be valid in the graphics drawer 032, so that the graphics drawer 032 may determine, based on whether a security identifier of each control is valid, whether each control is a security control.

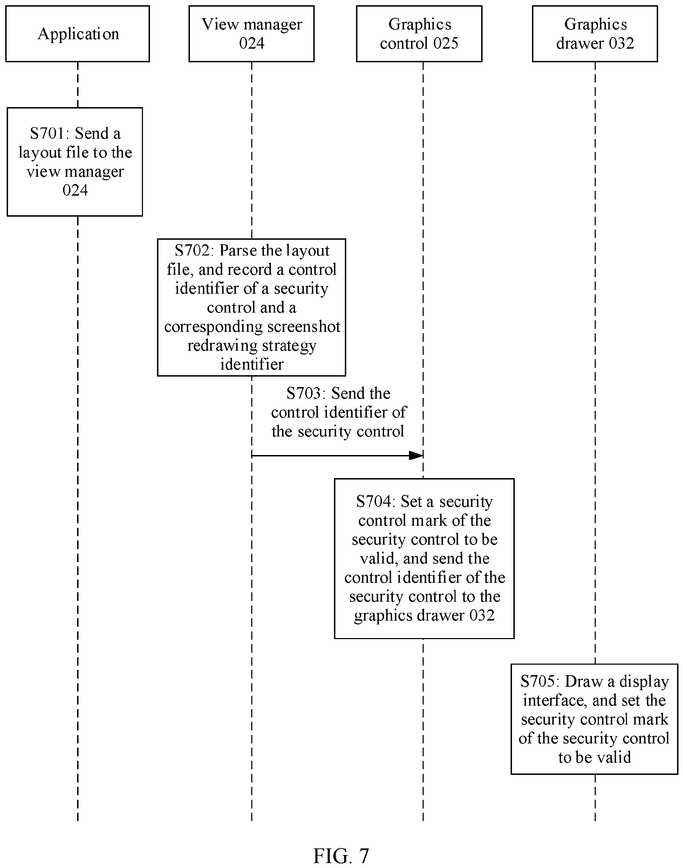

Specifically, FIG. 7 is a schematic interaction flowchart of a layout loading method according to some embodiments of this application.

S701: Send a layout file to a view manager 024.

During startup, an application sends the layout file to the view manager 024.

S702: Parse the layout file, and record a control identifier of a security control and a corresponding screenshot redrawing strategy identifier.

After receiving the layout file sent by the application, the view manager 024 parses the layout file to obtain a security control mark of each control in a window of the application, and determines control identifiers of security controls whose security control mark is valid. Then, the control identifier of the security control and the corresponding screenshot redrawing strategy identifier are recorded.

It may be understood that a screenshot redrawing strategy identifier of a security control indicates a screenshot redrawing strategy of the security control during screenshot taking.

For example, in some embodiments, a screenshot redrawing strategy identifier corresponding to the screenshot redrawing strategy "content clearing" may be "empty"; a screenshot regrouping strategy identifier corresponding to the screenshot redrawing strategy "filling" may be "mask"; a screenshot regrouping strategy identifier corresponding to the screenshot redrawing strategy "content replacing" may be "replace"; a screenshot regrouping strategy identifier corresponding to the screenshot redrawing strategy "hiding" may be "invisible"; a screenshot regrouping strategy identifier corresponding to the screenshot redrawing strategy "re-layout" may be "re-layout"; and a screenshot regrouping strategy identifier corresponding to the screenshot redrawing strategy "screenshot prohibiting" may be "forbidden".

It may be understood that the screenshot redrawing strategy identifier and the screenshot redrawing strategy are merely examples. In some other embodiments, another screenshot redrawing strategy identifier and another screenshot redrawing strategy may be used. This is not limited herein.

S703: The view manager 024 sends the control identifier of the security control to a graphics control 025.

The view manager 024 sends the control identifier of the security control to the graphics control 025.

S704: The graphics control 025 sets a security control mark of the security control to be valid, and sends the control identifier of the security control to a graphics drawer 032.

After receiving the control identifier of the security control, the graphics control 025 adds a valid security control identifier to the control corresponding to the control identifier, and sends the control identifier of the security control to the graphics drawer 032.

S705: Draw a display interface, and set the security control mark of the security control to be valid.

The graphics drawer 032 draws the display interface, and adds the valid security control identifier for the control corresponding to the control identifier.

For example, in the case shown in FIG. 2, the graphics drawer 032 of the mobile phone 10 may draw a payment interface of the Wallet application, and add valid security control identifiers for the barcode control 11, the two-dimensional code control 12, and the payment account control 13.

According to the method provided in embodiments of this application, when the electronic device loads the application layout, the graphics drawer 032 may set the security control identifier on the display interface of the electronic device to be valid, so that the electronic device may determine, based on the security control identifier, whether there is a security control on the display interface of the electronic device when performing screenshot taking or screen recording on the display interface of the electronic device.

In addition, developers of the application may add a same screenshot redrawing strategy identifier or different screenshot redrawing strategy identifiers to the layout file for security controls, to control a manner of redrawing a security control by the electronic device when the display interface includes the security control, so that screenshot content obtained after the electronic device redraws the security control is similar to that on the display interface. This improves user experience.

In addition, because the mobile phone 10 generates a screenshot image or a video by using the graphics drawer 032, when the application layout is loaded, the graphics drawer 032 adds the valid security control identifier for the security control on the drawn display interface, so that the graphics drawer 032 can directly determine whether there is a security control on the display interface of the electronic device, and does not interact with the video manager 024 or the application to determine whether there is a security control on the display interface. This helps improve a speed of generating the screenshot image or the video by the mobile phone 10.

It may be understood that, after adding the valid security control identifier for the security control on the current display interface of the mobile phone 10, the graphics drawer 032 may take, according to the content obtaining method provided in embodiments of this application, a screenshot of the display interface including the security control.

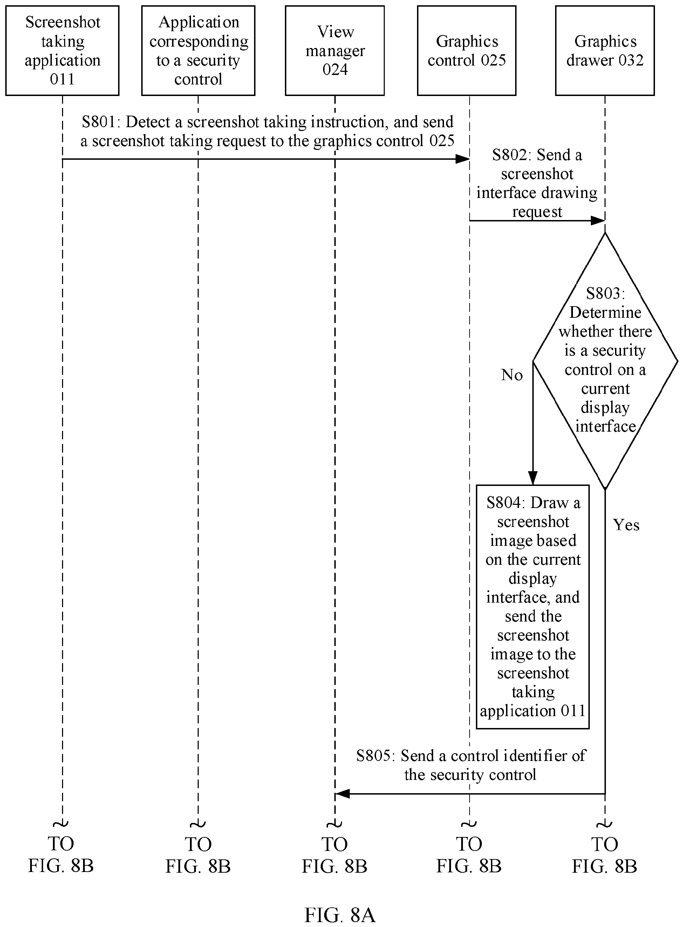

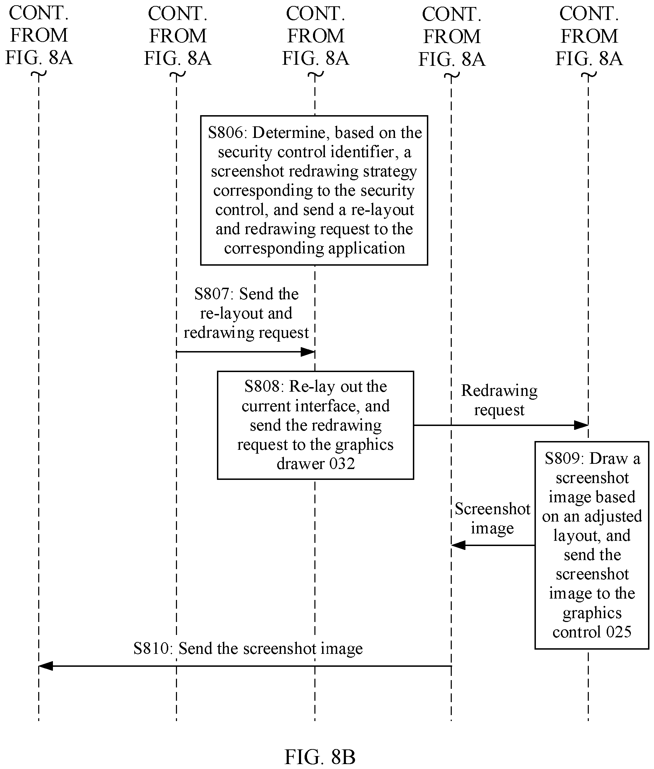

Specifically, FIG. 8A and FIG. 8B are a schematic interaction flowchart of a content obtaining method according to some embodiments of this application.

As shown in FIG. 8A and FIG. 8B, the interaction procedure includes the following steps:
S801: A screenshot taking application 011 detects a screenshot taking instruction, and sends a screenshot taking request to a graphics control 025.

After detecting the screenshot taking instruction, the screenshot taking application 011 sends the screenshot taking request to the graphics control 025.

For example, when a mobile phone 10 detects a screenshot taking gesture, a screenshot taking operation, or a screenshot taking voice defined by an operating system, a screenshot taking application or service, a screen recording application or service, or the like of the mobile phone 10, the screenshot taking application 011 may detect the screenshot taking instruction, and send the screenshot taking request to the graphics control 025.

For example, in the case shown in FIG. 2, when recognizing a single-knuckle knocking operation performed by a user on a touchscreen of the mobile phone 10, a knuckle gesture 031 may send a screenshot taking instruction to the screenshot taking application 011. After detecting the screenshot taking instruction, the screenshot taking application 011 sends a screenshot taking request to the graphics control 025.

It may be understood that, for specific content of the screenshot taking gesture, the screenshot taking operation, and the screenshot taking voice, refer to the step S401. Details are not described herein again.

S802: The graphics control 025 sends a screenshot image drawing request to a graphics drawer 032.

After receiving the screenshot taking request sent by the screenshot taking application 011, the graphics control 025 sends the screenshot image drawing request to the graphics drawer 032 in response to the screenshot taking request.

S803: The graphics drawer 032 determines whether there is a security control on a current interface.

The graphics drawer 032 determines, in response to the screenshot image drawing request, whether there is a security control on the current display interface of the mobile phone 10. If there is a security control on the current display interface, it indicates that the current display interface may include user sensitive data, and step S805 is performed. Otherwise, it indicates that the current display interface does not include user sensitive data, and step S804 is performed.

For example, the graphics drawer 032 may: obtain a security control mark of each control on the current display interface of the mobile phone 10, and when a security control mark of a control is valid, determine that there is a security control on the current display interface, and go to step S805; or when the security control mark of each control on the current display interface is invalid, determine that there is no security control on the current display interface, and go to step S804.

S804: The graphics drawer 032 draws a screenshot image based on the current display interface, and sends the screenshot image to the screenshot taking application 011.

When there is no security control on the current display interface of the mobile phone 10, the graphics drawer 032 directly draws a screenshot image based on the current display interface, and sends the drawn screenshot image to the screenshot taking application 011.

It may be understood that, in some embodiments, the graphics drawer 032 may first send the screenshot image to the graphics control 025, and then the graphics control 025 sends the screenshot image to the screenshot taking application 011.

S805: The graphics drawer 032 sends a control identifier of the security control.

When determining that the current display interface includes the security control, the graphics drawer 032 sends the control identifier of the security control to the view manager 024.

For example, in the case shown in FIG. 2, the graphics drawer 032 may send control identifiers 11, 12, and 13 of the barcode control 11, the two-dimensional code control 12, and the payment account control 13 to the view manager 024.

S806: Determine, based on the security control identifier, a screenshot redrawing strategy corresponding to the security control, and send a re-layout and redrawing request to a corresponding application.

After receiving the control identifier of the security control, the view manager 024 queries a screenshot redrawing strategy identifier corresponding to each security control, and sends the re-layout and redrawing request to the corresponding application based on a screenshot redrawing strategy corresponding to the screenshot redrawing strategy identifier.

For example, when determining that a screenshot redrawing strategy identifier corresponding to a security control is "empty", the view manager 024 sends, to an application corresponding to the security control, a re-layout and redrawing request for clearing content that is filled by the application and that is in the security control. When determining that a screenshot redrawing strategy identifier corresponding to a security control is "mask", the view manager 024 sends, to an application corresponding to the security control, a re-layout and redrawing request for filling an area corresponding to the security control with any one or more of a pattern, a color, a mosaic, or the like. When determining that a screenshot redrawing strategy identifier corresponding to a security control is "replace", the view manager 024 sends, to an application corresponding to the security control, a re-layout and redrawing request for replacing user sensitive data with data whose data type is the same as that of the user sensitive data in the security control. When determining that a screenshot redrawing strategy identifier corresponding to a security control is "invisible", the view manager 024 sends, to an application corresponding to the security control, a re-layout and redrawing request for retaining a placeholder of the security control but hiding the security control. When determining that a screenshot redrawing strategy identifier corresponding to a security control is "re-layout", the view manager 024 sends, to an application corresponding to the security control, a re-layout and redrawing request for deleting a placeholder of the security control and re-laying out a window of the application.

S807: The application corresponding to the security control sends the re-layout and redrawing request to the view manager 024.

After receiving the re-layout and redrawing request, the application corresponding to the security control forwards the re-layout and redrawing request to the view manager 024.

S808: The view manager 024 re-lays out the current interface, and sends the re-drawing request to the graphics drawer 032.

In response to the re-layout and redrawing request, the view manager 024 adjusts a layout attribute of each control based on a screenshot redrawing strategy corresponding to each security control, for example, whether to hide, whether to delete, and a location, to re-lay out each control. In addition, the view manager 024 sends the redrawing request to the graphics drawer 032 after the re-layout.

For example, in the case shown in FIG. 2, the view manager 024 may clear the payment barcode, the payment two-dimensional code, and the payment account that are filled by the application and that are respectively in the barcode control 11, the two-dimensional code control 12, and the payment account control 13. In the cases shown in FIG. 3A to FIG. 3C, the view manager 024 may fill the areas corresponding to the payment barcode, the payment two-dimensional code, and the payment account in the barcode control 11, the two-dimensional code control 12, and the payment account control 13 with a pattern (for example, a grid pattern), a color, and a mosaic respectively. In the case shown in FIG. 3D, the view manager 024 may replace the payment barcode in the barcode control 11 with the barcode whose indication content is "123456789", replace the payment two-dimensional code in the two-dimensional code control 12 with a two-dimensional code whose indication content is "123456789", and replace the payment account information in the payment account control 13 with "* * * * * *". In the case shown in FIG. 3E, the view manager 024 may set attributes of the barcode control 11, the two-dimensional code control 12, the payment account control 13, and the payment window 1 to be hidden. In the case shown in FIG. 3F, the view manager 024 may delete placeholders of the barcode control 11, the two-dimensional code control 12, the payment account control 13, and the payment window 1, and adjust a location of the control 23.

S809: The graphics drawer 032 draws a screenshot image based on an adjusted layout, and sends the screenshot image to the graphics control 025.

The graphics drawer 032 draws the screenshot image based on the adjusted layout, and sends the screenshot image to the graphics control 025.

S810: The graphics control 025 sends the screenshot image to the screenshot taking application 011.

After receiving the screenshot image, the graphics control 025 sends the screenshot image to the screenshot taking application 011.

It may be understood that, after receiving the screenshot image, the screenshot taking application 011 may store the screenshot image as a picture or share the screenshot image to another electronic device.

It may be understood that, when screen recording is performed on the mobile phone 10 by using the screen recording application 012, each frame of image during screen recording may be obtained according to the steps S801 to S810. Details are not described herein again.

According to the content obtaining method provided in embodiments of this application, the mobile phone 10 may take a screenshot of the current display interface of the mobile phone 10 when the current display interface includes the security control. This improves user experience. In addition, because the security control is redrawn based on the corresponding screenshot redrawing strategy, the screenshot image obtained after screenshot taking does not include user privacy information. This helps improve data security of the user. Moreover, because different security controls may use different screenshot redrawing strategies, a variety of the screenshot image may be increased. This helps improve user experience.

It may be understood that the technical solutions of this application described based on the software architecture shown in FIG. 5 are merely examples. In some other embodiments, functions of some modules may be combined or split, or functions of the modules shown in FIG. 5 may be performed by another module, or functions of some modules may be replaced. This is not limited herein.

It may be understood that, in some embodiments, an execution process of the steps S801 to S810 is merely an example. In some other embodiments, an execution sequence and an execution body of some steps may be adjusted, or some steps may be combined or split. This is not limited herein.

For example, in some embodiments, after receiving the control identifier of the security control, the view manager 024 may directly adjust the layout based on the screenshot redrawing strategy corresponding to each security control, and send the redrawing request to the graphics drawer 032, instead of initiating the re-layout and redrawing request by the application corresponding to the security control.

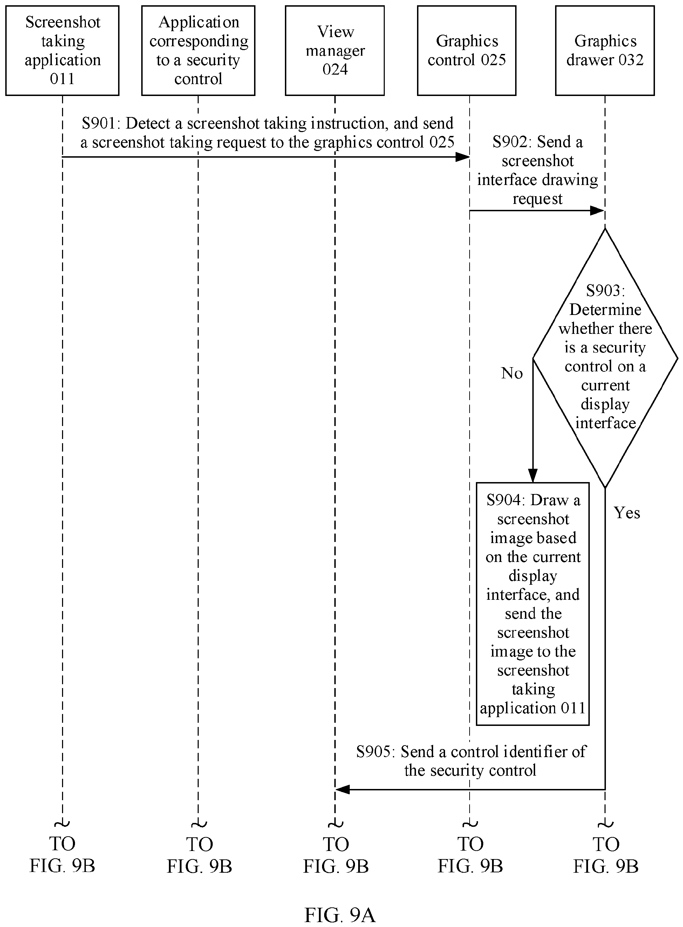

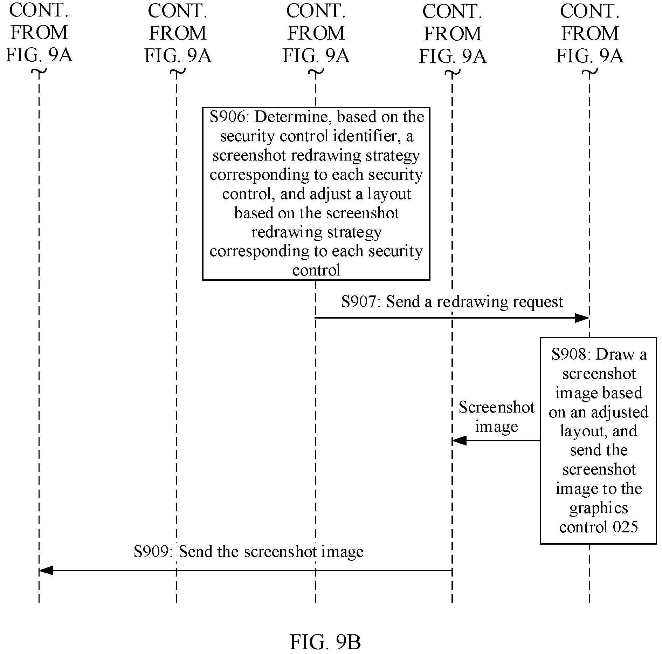

Specifically, FIG. 9A and FIG. 9B are a schematic interaction flowchart of another content obtaining method according to some embodiments of this application. As shown in FIG. 9A and FIG. 9B, the interaction procedure includes the following steps:
S901: A screenshot taking application 011 detects a screenshot taking instruction, and sends a screenshot taking request to a graphics control 025.

After detecting the screenshot taking instruction, the screenshot taking application 011 sends the screenshot taking request to the graphics control 025. For details, refer to the step S801. Details are not described herein again.

S902: The graphics control 025 sends a screenshot image drawing request to a graphics drawer 032.

After receiving the screenshot taking request sent by the screenshot taking application 011, the graphics control 025 sends the screenshot image drawing request to the graphics drawer 032 in response to the screenshot taking request.

S903: The graphics drawer 032 determines whether there is a security control on a current interface.

The graphics drawer 032 determines, in response to the screenshot image drawing request, whether there is a security control on the current display interface of the mobile phone 10. If there is a security control on the current display interface, it indicates that the current display interface may include user sensitive data, and step S905 is performed. Otherwise, it indicates that the current display interface does not include user sensitive data, and step S904 is performed. For a specific manner of determining whether there is a security control on the current interface, refer to the step S803. Details are not described herein again.

S904: The graphics drawer 032 draws a screenshot image based on the current display interface, and sends the screenshot image to the screenshot taking application 011.

When there is no security control on the current display interface of the mobile phone 10, the graphics drawer 032 directly draws a screenshot image based on the current display interface, and sends the drawn screenshot image to the screenshot taking application 011.

It may be understood that, in some embodiments, the graphics drawer 032 may first send the screenshot image to the graphics control 025, and then the graphics control 025 sends the screenshot image to the screenshot taking application 011.

S905: The graphics drawer 032 sends a control identifier of the security control.

When determining that the current display interface includes the security control, the graphics drawer 032 sends the control identifier of the security control to the view manager 024.

For example, in the case shown in FIG. 2, the graphics drawer 032 may send control identifiers 11, 12, and 13 of the barcode control 11, the two-dimensional code control 12, and the payment account control 13 to the view manager 024.

S906: Determine, based on the security control identifier, a screenshot redrawing strategy corresponding to each security control, and adjust a layout based on the screenshot redrawing strategy corresponding to each security control.

After receiving the control identifier of the security control, the view manager 024 queries a screenshot redrawing strategy identifier corresponding to each security control, and lays out the current display interface based on the screenshot redrawing strategy corresponding to the screenshot redrawing strategy identifier, for example, adjusts a layout attribute of the control, for example, whether to hide, whether to delete, a location, and content filling, to re-lay out each control.

For example, in the case shown in FIG. 2, the view manager 024 may clear the payment barcode, the payment two-dimensional code, and the payment account that are filled by the application and that are respectively in the barcode control 11, the two-dimensional code control 12, and the payment account control 13. In the cases shown in FIG. 3A to FIG. 3C, the view manager 024 may fill the areas corresponding to the payment barcode, the payment two-dimensional code, and the payment account in the barcode control 11, the two-dimensional code control 12, and the payment account control 13 with a pattern (for example, a grid pattern), a color, and a mosaic respectively. In the case shown in FIG. 3D, the view manager 024 may replace the payment barcode in the barcode control 11 with the barcode whose indication content is "123456789", replace the payment two-dimensional code in the two-dimensional code control 12 with a two-dimensional code whose indication content is "123456789", and replace the payment account information in the payment account control 13 with "* * * * * *". In the case shown in FIG. 3E, the view manager 024 may set attributes of the barcode control 11, the two-dimensional code control 12, the payment account control 13, and the payment window 1 to be hidden. In the case shown in FIG. 3F, the view manager 024 may delete placeholders of the barcode control 11, the two-dimensional code control 12, the payment account control 13, and the payment window 1, and adjust a location of the control 23.

S907: The view manager 024 sends a redrawing request to the graphics drawer 032.

The view manager 024 sends the redrawing request to the graphics drawer 032 after the re-layout.

S908: The graphics drawer 032 draws a screenshot image based on an adjusted layout, and sends the screenshot image to the graphics control 025.

The graphics drawer 032 draws the screenshot image based on the adjusted layout, and sends the screenshot image to the graphics control 025.

S909: The graphics control 025 sends the screenshot image to the screenshot taking application 011.

After receiving the screenshot image, the graphics control 025 sends the screenshot image to the screenshot taking application 011.

According to the content obtaining method provided in embodiments of this application, the mobile phone 10 may take a screenshot of the current display interface of the mobile phone 10 when the current display interface includes the security control. This improves user experience. In addition, because the security control is redrawn based on the corresponding screenshot redrawing strategy, the screenshot image obtained after screenshot taking does not include user privacy information. This helps improve data security of the user. Moreover, because different security controls may use different screenshot redrawing strategies, a variety of the screenshot image may be increased. This helps improve user experience.

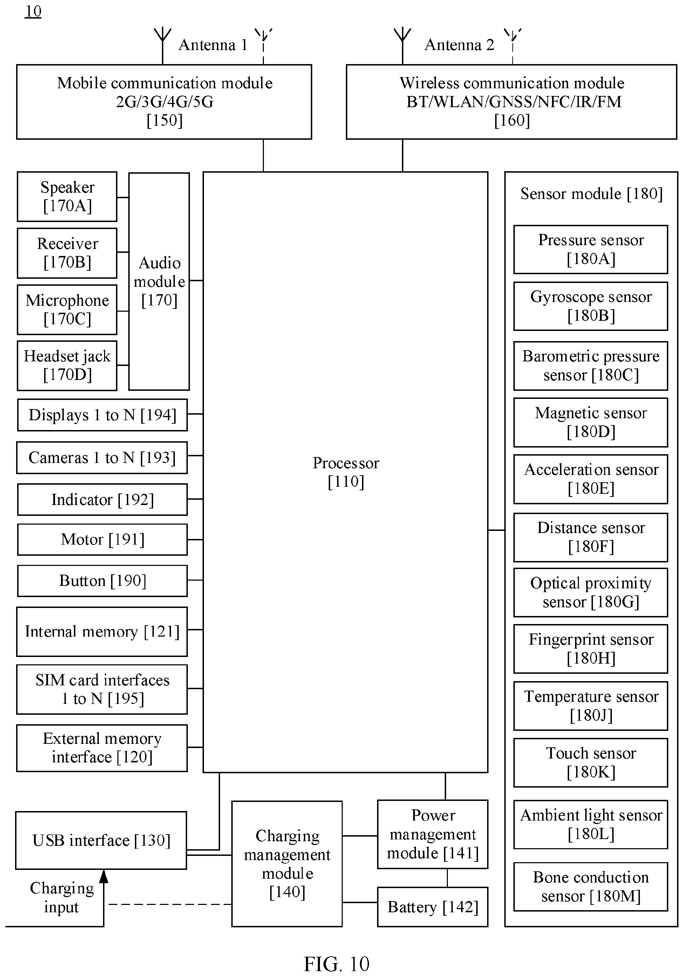

Further, FIG. 10 is a diagram of a structure of a mobile phone 10 according to some embodiments of this application.

As shown in FIG. 10, the mobile phone 10 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, a communication apparatus 196, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent devices, or may be integrated into one or more processors.

The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

In some embodiments, the processor 110 may be configured to: execute instructions corresponding to the content obtaining method provided in embodiments of this application; and when a screenshot taking operation performed by a user is detected, generate a screenshot image that does not include user sensitive data.

The USB interface 130 is an interface that conforms to a USB standard specification, and may be specifically a mini USB interface, a micro USB interface, a USB type-C interface, or the like. The USB interface 130 may be configured to connect to a charger to charge the mobile phone 10, or may be configured to exchange data between the mobile phone 10 and a peripheral device, or may be configured to connect to a headset for playing an audio through the headset. The interface may be further configured to connect to another electronic device such as an AR device.

The charging management module 140 is configured to receive a charging input from a charger. When charging the battery 142, the charging management module 140 may further supply power to the electronic device by using the power management module 141.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like.

A wireless communication function of the mobile phone 10 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal.

The mobile communication module 150 may provide a wireless communication solution that includes 2G/3G/4G/5G or the like and that is applied to the mobile phone 10. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and send a processed electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The wireless communication module 160 may provide a wireless communication solution that is applied to the mobile phone 10 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), an infrared (infrared, IR) technology, and the like. The wireless communication module 160 may be one or more devices integrating at least one communication processing module. The wireless communication module 160 may receive an electromagnetic wave through the antenna 2, perform processing such as filtering or amplification on the received electromagnetic wave, and send a processed electromagnetic wave to the modem processor for demodulation. The wireless communication module 160 may further amplify a signal modulated by the modem processor, and convert the signal into an electromagnetic wave for radiation through the antenna 2.

The mobile phone 10 implements a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the mobile phone 10 may include one or N displays 194, where N is a positive integer greater than 1.

The camera 193 is configured to capture a static image or a video. An optical image of an object is generated through a lens, and is projected onto a photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the mobile phone 10 may include one or N cameras 193, where N is a positive integer greater than 1.

The external memory interface 120 may be configured to connect to an external storage card, for example, a micro SD card, to extend a storage capability of the mobile phone 10. The external memory card communicates with the processor 110 through the external memory interface 120, to implement a data storage function. For example, files such as music and videos are stored in the external storage card.

The internal memory 121 may be configured to store computer-executable program code, where the executable program code includes instructions, for example, the memory 103. The internal memory 121 may include a program storage area and a data storage area. The program storage area may store an operating system, an application required by at least one function, and the like. The data storage area may store data and the like created in a process of using the mobile phone 10, for example, may be used to store a control identifier of a security control, a screenshot redrawing strategy identifier corresponding to the security control, and a pattern, an image, a text, and the like corresponding to a screenshot redrawing strategy. In addition, the internal memory 121 may include a high-speed random access memory, or may include a non-volatile memory, for example, at least one magnetic disk storage device, a flash memory, or a universal flash storage (universal flash storage, UFS). The processor 110 executes the instructions stored in the internal memory 121 and/or the instructions stored in the memory disposed in the processor 110, to perform various function applications of the mobile phone 10.

The mobile phone 10 may implement an audio function, for example, music playing or recording, by using the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to encode and decode an audio signal.

The speaker 170A, also referred to as a "loudspeaker", is configured to convert an audio electrical signal into a sound signal.

The receiver 170B, also referred to as an "earpiece", is configured to convert an audio electrical signal into a sound signal.

The microphone 170C, also referred to as a "mike" or a "mic", is configured to convert a sound signal into an electrical signal. For example, in some embodiments, the microphone 170C may collect a voice of the user, and send the voice to the processor 110. When detecting that the voice of the user includes voice data such as "image capturing", "screenshot taking", and "screen recording", the processor 110 may trigger the content obtaining method in embodiments of this application.

The headset jack 170D is configured to connect to a wired headset.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The mobile phone 10 determines pressure strength based on a change of the capacitance. When a touch operation is performed on the display 194, the mobile phone 10 detects intensity of the touch operation by using the pressure sensor 180A. The mobile phone 10 may also calculate a touch location based on a detection signal of the pressure sensor 180A.

The acceleration sensor 180E may detect magnitude of accelerations of the mobile phone 10 in various directions (usually on three axes). When the mobile phone 10 is still, a value and a direction of gravity may be detected. The acceleration sensor 180E may be further configured to: recognize a posture of the electronic device, determine whether the mobile phone 10 is in a landscape mode, and determine a status of an application such as a pedometer.

The ambient light sensor 180L is configured to sense ambient light brightness. The mobile phone 10 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G, to detect whether the mobile phone 10 is in a pocket, to avoid an accidental touch.

The fingerprint sensor 180H is configured to capture a fingerprint. The mobile phone 10 may use a feature of the captured fingerprint to implement fingerprint-based unlocking, application lock access, fingerprint-based photographing, fingerprint-based call answering, and the like.

The touch sensor 180K is also referred to as a "touch device". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of a touch event. A visual output related to the touch operation may be provided on the display 194. In some other embodiments, the touch sensor 180K may alternatively be disposed on a surface of the mobile phone 10 at a location different from that of the display 194. For example, in some embodiments, when detecting an operation performed by the user on the touchscreen, the touchscreen may send a touch event to the processor 110, so that the processor 110 can recognize a gesture of the user, to trigger the content obtaining method provided in embodiments of this application.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal.

The button 190 includes a power button, a volume button, and the like. The button 190 may be a mechanical button, or may be a touch button. The mobile phone 10 may receive a button input, and generate a key signal input related to a user setting and function control of the mobile phone 10. In some embodiments, when detecting a double-press operation performed by the user on the volume button, the processor 110 may trigger the content obtaining method provided in embodiments of this application.

The motor 191 may generate a vibration prompt.

The indicator 192 may be an indicator light, and may be configured to indicate a charging status and a power change, or may be configured to indicate a message, a missed call, a notification, and the like.

The SIM card interface 195 is configured to connect to a SIM card.

It may be understood that the structure of the mobile phone 10 shown in embodiments of this application does not constitute a specific limitation on the mobile phone 10. In some other embodiments of this application, the mobile phone 10 may include more or fewer components than those shown in the figure, or a combination of some components, or splits from some components, or a different component layout. The components shown in the figure may be implemented by hardware, software, or a combination of software and hardware.

Embodiments of mechanisms disclosed in this application may be implemented by hardware, software, firmware, or a combination of these implementation methods. Embodiments of this application may be implemented as a computer program or program code executed in a programmable system. The programmable system includes at least one processor, a storage system (including a volatile memory, a non-volatile memory, and/or a storage element), at least one input device, and at least one output device.

The program code may be applied to input instructions to execute the functions described in this application and generate output information. The output information may be applied to one or more output devices in a known manner. For a purpose of this application, a processing system includes any system having a processor such as a digital signal processor (DSP), a microcontroller, an application-specific integrated circuit, or a microprocessor.

The program code may be implemented in a high-level programming language or an object-oriented programming language to communicate with the processing system. The program code may alternatively be implemented in an assembly language or a machine language when required. The mechanisms described in this application are not limited to the scope of any particular programming language. In any case, the language may be a compiled language or an interpretive language.

In some cases, the disclosed embodiments may be implemented in hardware, firmware, software, or any combination thereof. The disclosed embodiments may alternatively be implemented as instructions that are carried or stored on one or more transitory or non-transitory machine-readable (for example, computer-readable) storage media and that may be read and executed by one or more processors. For example, the instructions may be distributed through a network or another computer-readable medium. Therefore, the machine-readable medium may include any mechanism for storing or transmitting information in a machine (for example, a computer) readable form, including but not limited to a floppy disk, a compact disc, an optical disc, a read-only memory (CD-ROMs), a magnetic optical disk, a read-only memory (ROM), a random access memory (RAM), an erasable programmable read-only memory (EPROM), an electrically erasable programmable read-only memory (EEPROM), a magnetic card, an optical card, a flash memory, or a tangible machine-readable memory used to transmit information (for example, a carrier, an infrared signal, or a digital signal) by using a propagating signal in an electrical, optical, acoustic, or another form over the internet. Therefore, the machine-readable medium includes any type of machine-readable medium suitable for storing or transmitting an electronic instruction or information in a machine (namely, computer)-readable form.

In the accompanying drawings, some structural or method features may be shown in a particular arrangement and/or order. However, it should be understood that such a particular arrangement and/or order may not be needed. In some embodiments, these features may be arranged in a manner and/or an order different from that shown in the descriptive accompanying drawings. In addition, inclusion of the structural or method features in a particular figure does not imply that such features are needed in all embodiments, and in some embodiments, these features may not be included or may be combined with other features.

It should be noted that all units/modules mentioned in device embodiments of this application are logical units/modules. Physically, one logical unit/module may be one physical unit/module, may be a part of one physical unit/module, or may be implemented by a combination of a plurality of physical units/modules. Physical implementations of these logical units/modules are not the most important, and a combination of functions implemented by these logical units/modules is a key to resolve the technical problem provided in this application. In addition, to highlight an innovative part of this application, a unit/module that is not closely related to resolving the technical problem provided in this application is not introduced in the foregoing device embodiments of this application. This does not mean that there are no other units/modules in the foregoing device embodiments.

It should be noted that in examples and this specification of this patent, relational terms such as first and second are used only to differentiate an entity or operation from another entity or operation, and do not require or imply that any actual relationship or sequence exists between these entities or operations. Moreover, the term "include" or any other variant thereof is intended to cover a non-exclusive inclusion, so that a process, a method, an article, or a device that includes a list of elements not only includes those elements but also includes other elements that are not expressly listed, or further includes elements inherent to such a process, method, article, or device. Without further limitations, an element limited by "include a/an" does not exclude other same elements existing in the process, the method, the article, or the device that includes the element.

Although this application has been illustrated and described with reference to some preferred embodiments of this application, a person of ordinary skill in the art should understand that various changes may be made to this application in form and detail without departing from the spirit and scope of this application.

## Claims

1. A content obtaining method, applied to an electronic device, wherein the method comprises:
detecting a content obtaining instruction of a user for a display interface on a screen of the electronic device; and
in response to the content obtaining instruction, generating display content data corresponding to the display interface, wherein when the display interface comprises a first security control, the display content data comprises first redrawn data obtained by redrawing the first security control in a first redrawing manner.

2. The method according to claim 1, wherein when a security control identifier corresponding to the first security control is valid, the electronic device determines that the display interface comprises the first security control.

3. The method according to claim 2, wherein the security control identifier of the first security control is set to be valid when a layout file of an application corresponding to the first security control is loaded.

4. The method according to claim 1, wherein the first redrawing manner is obtained from a layout file of a first application corresponding to the first security control.

5. The method according to claim 1, wherein the first redrawing manner comprises at least one of the following: content clearing, filling, content replacing, hiding, and re-layout.

6. The method according to claim 5, wherein when the first redrawing manner is the content replacing, the redrawing the first security control in a first redrawing manner comprises:
obtaining a data type of user sensitive data in the first security control; and
replacing the user sensitive data with preset data whose data type is the same as that of the user sensitive data.

7. The method according to claim 5, wherein when the first redrawing manner is the re-layout, the redrawing the first security control in a first redrawing manner comprises:
deleting a placeholder of the first security control in a current layout of an application corresponding to the first security control; and
re-laying out another control in the current layout.

8. The method according to claim 5, wherein when the first redrawing manner is the content clearing, the redrawing the first security control in a first redrawing manner comprises:
clearing user sensitive data in the first security control, and retaining a placeholder of the first security control in a current layout of an application corresponding to the first security control.

9. The method according to claim 5, wherein when the first redrawing manner is the filling, the redrawing the first security control in a first redrawing manner comprises:
filling an area in which user sensitive data in the first security control is located with any one or more of a preset color, a pattern, or a mosaic.

10. The method according to claim 5, wherein when the first redrawing manner is the hiding, the redrawing the first security control in a first redrawing manner comprises:
hiding the first security control, and retaining a placeholder of the first security control in a current layout of an application corresponding to the first security control.

11. The method according to any one of claims 1 to 10, wherein the display interface further comprises a second security control, and the display content data comprises second redrawn data obtained by redrawing the second security control in a second redrawing manner.

12. The method according to claim 1, wherein the content obtaining instruction comprises a screenshot taking instruction or a screen recording instruction, and the display content data comprises a screenshot image or a video.

13. The method according to claim 1, wherein an operating system of the electronic device is an Android system, and the Android system comprises a graphics drawing module; and when it is determined that the display interface comprises the first security control, the graphics drawing module generates the display content data corresponding to the content obtaining instruction.

14. A computer-readable storage medium, wherein the readable storage medium comprises instructions, and when the instructions are executed by an electronic device, the electronic device is enabled to implement the method according to any one of claims 1 to 13.

15. An electronic device, comprising:
a memory, wherein the memory stores instructions; and
at least one processor, configured to execute the instructions to enable the electronic device to implement the method according to any one of claims 1 to 13.

16. A computer program product, wherein when the program product runs on an electronic device, the electronic device is enabled to implement the method according to any one of claims 1 to 13.
